# EUROPEAN PATENT APPLICATION

(11) **EP 4 560 715 A2**
(43) Date of publication of application: **28.05.2025**
(21) Application number: 24210672.2
(22) Date of filing: 04.11.2024
(51) Int. Cl.: H01M 4/04

(54) **DRY ELECTRODE MANUFACTURING APPARATUS, METHOD OF MANUFACTURING DRY ELECTRODE, AND DRY ELECTRODE**

(30) Priority: 24.11.2023 KR 20230166080
(71) Applicant: SAMSUNG SDI CO., LTD., Yongin-si, Gyeonggi-do 17084 (KR)
(72) Inventor: PYUN, Ahram, Yongin-si, Gyeonggi-do 17084 (KR); LEE, Jinhyon, Yongin-si, Gyeonggi-do 17084 (KR); KWON, Seunguk, Yongin-si, Gyeonggi-do 17084 (KR); LEE, Donggeun, Yongin-si, Gyeonggi-do 17084 (KR); CHOI, Jongsup, Yongin-si, Gyeonggi-do 17084 (KR)
(74) Representative: Marks & Clerk LLP

(57) **Abstract**

A dry electrode manufacturing apparatus according to embodiments includes: a fine powder supply portion that supplies a fine powder; a first roller and a second roller that calender the fine powder supplied from the fine powder supply portion to form an electrode film; and a third roller and a fourth roller that stretch the calendared electrode film through the first roller and the second roller. The first roller rotates in a first direction with a first velocity, the second roller rotates in a second direction different from the first direction with a second velocity, the third roller rotates in a third direction different from the second direction with a third velocity, the fourth roller rotates in a fourth direction different from the third direction with the fourth velocity, a linear velocity in the second direction of the second roller is greater than a linear velocity in the first direction of the first roller, a linear velocity in the third direction of the third roller is greater than the linear velocity in the second direction of the second roller, and a linear velocity in the fourth direction of the fourth roller is greater than the linear velocity in the third direction of the third roller.

## Description

### BACKGROUND

### (a) Field

The present disclosure relates to a dry electrode manufacturing apparatus, a manufacturing method of a dry electrode, and a dry electrode.

### (b) Description of the Related Art

Generally, a rechargeable battery is a battery capable of being repeatedly charged and discharged.

A need for a manufacturing method of manufacturing a dry electrode for the rechargeable battery without using a solvent has recently increased.

In a conventional manufacturing method of the dry electrode, a mixture including an active material, a conductive material, and a binder may be fiberized into a fibrous dry powder using a kneading device or the like, the fibrous dry powder may be calendered and stretched as a freestanding film using a calendering roll or the like, and then the freestanding film may be laminated on a current collector to manufacture the dry electrode. However, a crack or a defect may occur in the freestanding film during a stretching process in which the freestanding film is stretched. In such a case, the freestanding film may rupture during a subsequent laminating process.

### SUMMARY

Embodiments provide a dry electrode manufacturing apparatus, a manufacturing method of a dry electrode, and a dry electrode capable of preventing rupture of a film for an electrode. However, problems to be solved by the embodiments are not limited to the above-described problems and may be variously extended in a range of technical ideas included in the embodiments.

A dry electrode manufacturing apparatus according to embodiments includes: a fine powder supply portion configured to supply a fine powder; a first roller and a second roller configured to calender the fine powder supplied from the fine powder supply portion to form an electrode film; and a third roller and a fourth roller configured to stretch the calendared electrode film formed by the first roller and the second roller. The first roller is configured to rotate in a first direction at a first velocity, the second roller is configured to rotate in a second direction different from the first direction at a second velocity, the third roller is configured to rotate in a third direction different from the second direction at a third velocity, the fourth roller is configured to rotate in a fourth direction different from the third direction at a fourth velocity, with the dry electrode manufacturing apparatus being configured such that a linear velocity in the second direction of the second roller is greater than a linear velocity in the first direction of the first roller, a linear velocity in the third direction of the third roller is greater than the linear velocity in the second direction of the second roller, and a linear velocity in the fourth direction of the fourth roller is greater than the linear velocity in the third direction of the third roller.

The dry electrode manufacturing apparatus may be configured such that the second rotational velocity of the second roller may be greater than the first rotational velocity of the first roller, the third rotational velocity of the third roller may be greater than the second velocity of the second roller, and the fourth rotational velocity of the fourth roller may be greater than the third velocity of the third roller.

The dry electrode manufacturing apparatus may further include a fifth roller that is in contact with the first roller and is configured to rotate in a direction different from the first direction.

A diameter of the second roller may be greater than a diameter of the first roller, a diameter of the third roller may be greater than the diameter of the second roller, and a diameter of the fourth roller may be greater than the diameter of the third roller.

A diameter of the fifth roller may be substantially the same as a diameter of the first roller, a diameter of the second roller, a diameter of the third roller, and a diameter of the fourth roller.

A diameter of the fifth roller may be substantially the same as a diameter of the first roller.

A diameter of the fifth roller may be greater than a diameter of the first roller, and a diameter of the fourth roller may be substantially the same as the diameter of the first roller.

A diameter of the fifth roller may be greater than a diameter of the first roller, and a diameter of the fourth roller may be substantially the same as the diameter of the fifth roller.

A dry electrode manufacturing apparatus according to other embodiments includes: a fine powder supply portion configured to supply a fine powder; a first roller and a second roller configured to calender the fine powder supplied from the fine powder supply portion to form an electrode film; and a third roller and a fourth roller configured to stretch the calendared electrode film through the first roller and the second roller. A surface adhesive force of the second roller is greater than a surface adhesive force of the first roller, a surface adhesive force of the third roller is greater than the surface adhesive force of the second roller, and a surface adhesive force of the fourth roller is greater than the surface adhesive force of the third roller.

A surface roughness of the second roller may be greater than a surface roughness of the first roller, a surface roughness of the third roller may be greater than the surface roughness of the second roller, and a surface roughness of the fourth roller may be greater than the surface roughness of the third roller.

First protrusions may be disposed on a surface of the second roller, second protrusions may be disposed on a surface of the third roller, third protrusions may be disposed on a surface of the fourth roller, widths and heights of the second protrusions may be greater than widths and heights of the first protrusions, and widths and heights of the third protrusions may be greater than the widths and the heights of the second protrusions.

A manufacturing method of a dry electrode according to embodiments includes: supplying a fine powder between a first roller and a second roller; calendering the fine powder to form an electrode film by rotating the first roller at a first velocity in a first direction and rotating the second roller at a second velocity in a second direction different from the first direction; and stretching the calendared electrode film through a third roller and a fourth roller. The electrode film is sequentially transferred to the second roller, the third roller, and the fourth roller.

The first roller may rotate in the first direction at the first velocity, the second roller may rotate in the second direction different from the first direction at the second velocity, the third roller may rotate in a third direction different from the second direction at a third velocity, the fourth roller may rotate in a fourth direction different from the third direction at a fourth velocity, the second velocity of the second roller may be greater than the first velocity of the first roller, the third velocity of the third roller may be greater than the second velocity of the second roller, and the fourth velocity of the fourth roller may be greater than the third velocity of the third roller.

The first velocity of the first roller, the second velocity of the second roller, the third velocity of the third roller, and the fourth velocity of the fourth roller may be substantially the same.

At least some of the above and other features of the invention are set out in the claims.

According to the embodiments, a dry electrode manufacturing apparatus, a manufacturing method of a dry electrode, and a dry electrode capable of preventing rupture of a film for an electrode may be provided.

It is obvious that effects of the embodiments are not limited to the above-described effects and may be variously extended without departing from the scope of the present disclosure.

### BRIEF DESCRIPTION OF THE DRAWINGS

FIG. 1 is a cross-sectional view of a dry electrode manufacturing apparatus, a manufacturing method of a dry electrode, and a manufactured dry electrode according to embodiments.
FIG. 2 is a cross-sectional view of a dry electrode manufacturing apparatus, a manufacturing method of a dry electrode, and a manufactured dry electrode according to other embodiments.
FIG. 3 is a cross-sectional view of a dry electrode manufacturing apparatus, a manufacturing method of a dry electrode, and a manufactured dry electrode according to other embodiments.
FIG. 4 is a cross-sectional view of a dry electrode manufacturing apparatus, a manufacturing method of a dry electrode, and a manufactured dry electrode according to other embodiments.
FIG. 5 is a cross-sectional view of a dry electrode manufacturing apparatus, a manufacturing method of a dry electrode, and a manufactured dry electrode according to other embodiments.
FIG. 6 is a cross-sectional view of a dry electrode manufacturing apparatus, a manufacturing method of a dry electrode, and a manufactured dry electrode according to other embodiments.
FIG. 7 is a cross-sectional view of a dry electrode manufacturing apparatus, a manufacturing method of a dry electrode, and a manufactured dry electrode according to other embodiments.
FIG. 8 is a cross-sectional view of a dry electrode manufacturing apparatus, a manufacturing method of a dry electrode, and a manufactured dry electrode according to other embodiments.

### DETAILED DESCRIPTION OF THE EMBODIMENTS

Embodiments of the present disclosure will be described more fully hereinafter with reference to the accompanying drawings so that those skilled in the art can easily implement the embodiments. The present disclosure may be modified in various different ways, all without departing from the scope of the present disclosure.

In order to clearly describe the present disclosure, parts or portions that are irrelevant to the description are omitted, and identical or similar constituent elements throughout the specification are denoted by the same reference numerals.

Further, the accompanying drawings are provided only in order to allow embodiments disclosed in the present specification to be easily understood and are not to be interpreted as limiting the scope disclosed in the present specification. It is to be understood that the present disclosure includes all modifications, equivalents, and substitutions without departing from the scope of the present disclosure.

Further, in the drawings, the size and thickness of each element are arbitrarily illustrated for ease of description, and the present disclosure is not necessarily limited to those illustrated in the drawings. In the drawings, the thicknesses of layers, films, panels, regions, areas, etc., are exaggerated for clarity. In the drawings, for ease of description, the thicknesses of some layers and areas are exaggerated.

It will be understood that when an element such as a layer, film, region, area, or substrate is referred to as being "on" or "above" another element, it may be directly on the other element or intervening elements may also be present. In contrast, when an element is referred to as being "directly on" another element, there are no intervening elements present. Further, in the specification, the word "on" or "above" means disposed on or below the object portion, and does not necessarily mean disposed on the upper side of the object portion based on a gravitational direction.

In addition, unless explicitly described to the contrary, the word "comprise" and variations such as "comprises" or "comprising" will be understood to imply the inclusion of stated elements but not the exclusion of any other elements.

Further, throughout the specification, the phrase "in a plan view" or "on a plane" means viewing a target portion from the top, and the phrase "in a cross-sectional view" or "on a cross-section" means viewing a cross-section formed by vertically cutting a target portion from the side.

Furthermore, throughout the specification, "connected" does not only mean when two or more elements are directly connected, but also when two or more elements are indirectly connected through other elements, and when they are physically connected or electrically connected, and further, it may be referred to by different names depending on a position or function, and may also be referred to as a case in which respective parts that are substantially integrated are linked to each other.

Hereinafter, various embodiments and variations will be described in detail with reference to the drawings.

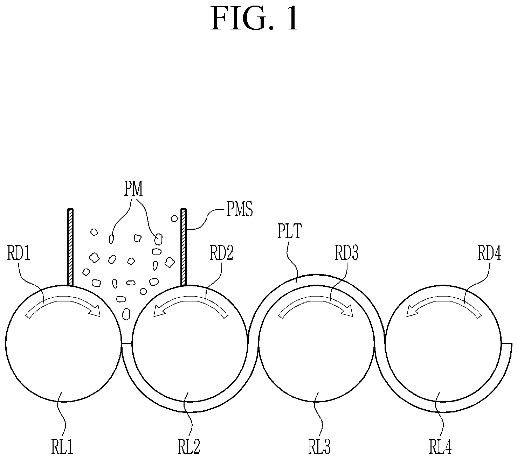

A dry electrode manufacturing apparatus and a manufacturing method of a dry electrode according to embodiments will be schematically described with reference to FIG. 1. FIG. 1 is a cross-sectional view of the dry electrode manufacturing apparatus, the manufacturing method of the dry electrode, and a manufactured dry electrode according to embodiments.

The manufacturing method of the dry electrode may be a method for manufacturing a dry electrode for a rechargeable battery, but the present disclosure is not limited thereto, and the manufacturing method of the dry electrode may be a method for manufacturing various known dry electrodes. Each of a fiberization device (or a fiberizing device), a grinding device, a calendering device, and a laminating device used in the manufacturing method of the dry electrode according to the embodiments may include various known devices.

Referring to FIG. 1, the dry electrode manufacturing apparatus according to the embodiments may include a fine powder supply portion PMS that supplies a fine powder PM for an electrode, and a plurality of rollers RL1, RL2, RL3, and RL4 for calendering and stretching the supplied fine powder PM. The first roller RL1 and the second roller RL2 among the plurality of rollers RL1, RL2, RL3, and RL4 may calender the supplied fine powder PM. The second roller RL2, the third roller RL3, and the fourth roller RL4 among the plurality of rollers RL1, RL2, RL3, and RL4 may stretch a calendered electrode film PLT to form a thin and uniform electrode film PLT. The embodiment is not limited to the depicted configuration, for example, the number of rollers for stretching among the plurality of rollers RL1, RL2, RL3, and RL4 may be changed.

The first roller RL1 may have a first rotational velocity RD1 and may rotate in a first rotation direction (for example, a clockwise direction). The second roller RL2 may have a second rotational velocity RD2 and may rotate in a second rotation direction (for example, a counterclockwise direction) opposite to the first rotation direction. Diameters of the first roller RL1 and the second roller RL2 may be similar or the same. However, the embodiment is not limited thereto. The second rotational velocity RD2 of the second roller RL2 may be greater than the first rotational velocity RD1 of the first roller RL1. However, the embodiment is not limited thereto.

As the fine powder PM is supplied between the first roller RL1 and the second roller RL2 from the fine powder supply portion PMS, the first roller RL1 and the second roller RL2 may rotate in the first and second rotation directions that are different directions so that the supplied fine powder PM is calendered to form the electrode film (or the film for the electrode) PLT with a film shape.

An active material, a conductive material, and a binder may be mixed using various known mixing devices to generate a mixture, the mixture may be fiberized using various known fiberization devices, and then the fiberized dry powder may be crushed to supply the fine powder PM.

The electrode film PLT that passes between the first roller RL1 and the second roller RL2 may be stretched while sequentially passing through the second roller RL2, the third roller RL3, and the fourth roller RL4. The number of stretching rollers RL3 and RL4 may be varied and may include at least two rollers.

Because the second rotational velocity RD2 of the second roller RL2 is greater than the first rotational velocity RD1 of the first roller RL1, a linear velocity in the second rotation direction may be greater than a linear velocity in the first rotation direction, and the electrode film PLT that passes between the first roller RL1 and the second roller RL2 may be transferred toward the second roller RL2 having a higher linear velocity than that of the first roller RL1.

The third roller RL3 may have a third rotational velocity RD3 and may rotate in a third rotation direction that is opposite to the second rotation direction. The fourth roller RL4 may have a fourth rotational velocity RD4 and may rotate in a fourth rotation direction that is opposite to the third rotation direction. Diameters of the third roller RL3 and the fourth roller RL4 may be similar to or the same. However, the embodiment is not limited thereto. The diameter of the third roller RL3 and the diameter of the fourth roller RL4 may be similar to or the same as the diameter of the first roller RL1 and the diameter of the second roller RL2. However, the embodiment is not limited thereto.

The third rotational velocity RD3 of the third roller RL3 may be greater than the second rotational velocity RD2 of the second roller RL2. The fourth rotational velocity RD4 of the fourth roller RL4 may be greater than the third rotational velocity RD3 of the third roller RL3. Because the third rotational velocity RD3 of the third roller RL3 is greater than the second rotational velocity RD2 of the second roller RL2, a linear velocity in the third rotation direction may be greater than a linear velocity in the second rotation direction, and the electrode film PLT that passes between the second roller RL2 and the third roller RL3 may be transferred toward the third roller RL3 having a higher linear velocity than that of the second roller RL2. Similarly, because the fourth rotational velocity RD4 of the fourth roller RL4 is greater than the third rotational velocity RD3 of the third roller RL3, a linear velocity in the fourth rotation direction may be greater than a linear velocity in the third rotation direction, and the electrode film PLT that passes between the third roller RL3 and the fourth roller RL4 may be transferred toward the fourth roller RL4 having a higher linear velocity than that of the third roller RL3.

The fine powder PM passing between the first roller RL1 and the second roller RL2 may be calendered to form the electrode film PLT with the film shape. The calendered electrode film PLT may be automatically transferred, compressed, and stretched while passing through the second roller RL2, the third roller RL3, and the fourth roller RL4. Because the electrode film PLT is automatically transferred sequentially to the second roller RL2, the third roller RL3, and the fourth roller RL4, compressed, and stretched, the electrode film PLT may not be stretched in a state in which the electrode film PLT is subsequently elongated. Thus, a crack or a defect within a freestanding electrode film PLT that may occur during a stretching process performed in a state in which the freestanding electrode film PLT is extended may be reduced, and rupturing of the freestanding electrode film PLT may be prevented during a subsequent laminating process. Further, by stretching the electrode film PLT using the plurality of stretching rollers, active material particles within the electrode film PLT may be effectively redisposed, and a defect such as breakage of the active material may be prevented without increasing binder content.

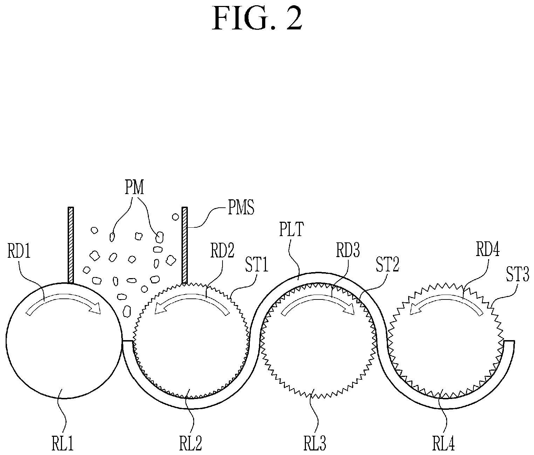

A dry electrode manufacturing apparatus and a manufacturing method of a dry electrode according to other embodiments will be described with reference to FIG. 2. FIG. 2 is a cross-sectional view of the dry electrode manufacturing apparatus, the manufacturing method of the dry electrode, and a manufactured dry electrode according to other embodiments.

Referring to FIG. 2, the dry electrode manufacturing apparatus according to the present embodiment is similar to the dry electrode manufacturing apparatus according to the embodiments described with reference to FIG. 1. Thus, detailed descriptions of the same components will be omitted.

As shown in FIG. 2, the dry electrode manufacturing apparatus according to the present embodiment may include a fine powder supply portion PMS that supplies a fine powder PM for an electrode, and a plurality of rollers RL1, RL2, RL3, and RL4 for calendering and stretching the supplied fine powder PM. The first roller RL1 and the second roller RL2 among the plurality of rollers RL1, RL2, RL3, and RL4 may calender the supplied fine powder PM to form a calendered electrode film PLT. The second roller RL2, the third roller RL3, and the fourth roller RL4 among the plurality of rollers RL1, RL2, RL3, and RL4 may stretch the calendered electrode film PLT to form a thin and uniform electrode film PLT. But the present disclosure is not limited to the depicted configuration, and the number of rollers for stretching among the plurality of rollers RL1, RL2, RL3, and RL4 may be changed.

The first roller RL1 may have a first rotational velocity RD1 and may rotate in a first rotation direction (for example, a clockwise direction). The second roller RL2 may have a second rotational velocity RD2 and may rotate in a second rotation direction (for example, a counterclockwise direction) opposite to the first rotation direction. The third roller RL3 may have a third rotational velocity RD3 and may rotate in a third rotation direction that is opposite to the second rotation direction. The fourth roller RL4 may have a fourth rotational velocity RD4 and may rotate in a fourth rotation direction that is opposite to the third rotation direction.

Diameters of the first roller RL1 and the second roller RL2 may be similar or the same. Diameters of the third roller RL3 and the fourth roller RL4 may be similar or the same. The diameter of the third roller RL3 and the diameter of the fourth roller RL4 may be similar to or the same as the diameter of the first roller RL1 and the diameter of the second roller RL2. However, the embodiment is not limited thereto.

The first rotational velocity RD1 of the first roller RL1 of the dry electrode manufacturing apparatus according to the present embodiment may be similar to or the same as the second rotational velocity RD2 of the second roller RL2. The third rotational velocity RD3 of the third roller RL3 may be similar to or the same as the second rotational velocity RD2 of the second roller RL2. The fourth rotational velocity RD4 of the fourth roller RL4 may be similar to or the same as the third rotational velocity RD3 of the third roller RL3. However, the embodiment is not limited thereto.

Unlike the dry electrode manufacturing apparatus according to the embodiments of FIG. 1, in the present embodiment a surface roughness of the second roller RL2 may be greater than a surface roughness of the first roller RL1 of the dry electrode manufacturing apparatus. For example, first protrusions ST1 may be disposed on a surface of the second roller RL2, but no such protrusions may be formed on a surface of the first roller RL1. A surface roughness of the third roller RL3 may be greater than the surface roughness of the second roller RL2, and a surface roughness of the fourth roller RL4 may be greater than the surface roughness of the third roller RL3. For example, second protrusions ST2 may be disposed on a surface of the third roller RL3, third protrusions ST3 may be disposed on a surface of the fourth roller RL4, with widths and heights of the second protrusions ST2 being greater than widths and heights of the first protrusion ST1, and widths and heights of the third protrusions ST3 being greater than widths and heights of the second protrusions ST2.

As the fine powder PM is supplied between the first roller RL1 and the second roller RL2 from the fine powder supply portion PMS, the first roller RL1 and the second roller RL2 may rotate in the first and second rotation directions (which are different directions) so that the supplied fine powder PM is calendered to form the electrode film (or the film for the electrode) PLT in a film shape.

The electrode film PLT that passes between the first roller RL1 and the second roller RL2 may be stretched while sequentially passing through the second roller RL2, the third roller RL3, and the fourth roller RL4.

Because the surface roughness of the second roller RL2 is greater than the surface roughness of the first roller RL1, an adhesive force between the electrode film PLT and the second roller RL2 may be greater than an adhesive force between the electrode film PLT and the first roller RL1. Thus, the electrode film PLT passing between the first roller RL1 and the second roller RL2 may be transferred toward the second roller RL2 having a greater adhesive force than that of the first roller RL1.

Because the surface roughness of the third roller RL3 is greater than the surface roughness of the second roller RL2, an adhesive force between the electrode film PLT and the third roller RL3 may be greater than the adhesive force between the electrode film PLT and the second roller RL2, and the electrode film PLT that passes between the second roller RL2 and the third roller RL3 may be transferred toward the third roller RL3 having a greater adhesive force than that of the second roller RL2. Similarly, because the surface roughness of the fourth roller RL4 is greater than the surface roughness of the third roller RL3, an adhesive force between the electrode film PLT and the fourth roller RL4 may be greater than the adhesive force between the electrode film PLT and the third roller RL3, and the electrode film PLT that passes between the third roller RL3 and the fourth roller RL4 may be transferred toward the fourth roller RL4 having a greater adhesive force than that of the third roller RL3.

The fine powder PM passing between the first roller RL1 and the second roller RL2 may be calendered to form the electrode film PLT with the film shape, and the calendered electrode film PLT may be automatically transferred, compressed, and stretched while passing through the second roller RL2, the third roller RL3, and the fourth roller RL4. Because the electrode film PLT is automatically transferred sequentially to the second roller RL2, the third roller RL3, and the fourth roller RL4, compressed, and stretched, the electrode film PLT may not be stretched in a state in which the electrode film PLT is subsequently elongated. Thus, a crack or a defect within a freestanding electrode film PLT that might occur during a stretching process performed in a state in which the freestanding electrode film PLT is extended may be prevented or reduced, and rupturing of the freestanding electrode film PLT may be prevented during a subsequent laminating process.

According to the other embodiments, like the dry electrode manufacturing apparatus according to the embodiments described with reference to FIG. 1, the second rotational velocity RD2 of the second roller RL2 may be greater than the first rotational velocity RD1 of the first roller RL1, the third rotational velocity RD3 of the third roller RL3 may be greater than the second rotational velocity RD2 of the second roller RL2, and the fourth rotational velocity RD4 of the fourth roller RL4 may be greater than the third rotational velocity RD3 of the third roller RL3. Thus, the electrode film PLT passing between the first roller RL1 and the second roller RL2 may be transferred toward the second roller RL2 having a higher linear velocity than that of the first roller RL1 and a greater adhesive force than that of the first roller RL1, the electrode film PLT passing between the second roller RL2 and the third roller RL3 may be transferred toward the third roller RL3 having a higher linear velocity than that of the second roller RL2 and a greater adhesive force than that of the second roller RL2, and the electrode film PLT passing between the third roller RL3 and the fourth roller RL4 may be transferred toward the fourth roller RL4 having a higher linear velocity than that of the third roller RL3 and a greater adhesive force than that of the third roller RL3.

Many features of the dry electrode manufacturing apparatus according to the embodiments described above with reference to FIG. 1 are applicable to the dry electrode manufacturing apparatus according to the present embodiment.

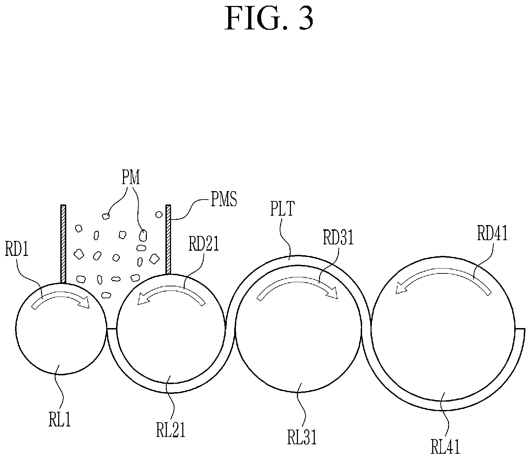

A dry electrode manufacturing apparatus and a manufacturing method of a dry electrode according to other embodiments will be described with reference to FIG. 3. FIG. 3 is a cross-sectional view of the dry electrode manufacturing apparatus, the manufacturing method of the dry electrode, and a manufactured dry electrode according to other embodiments.

Referring to FIG. 3, the dry electrode manufacturing apparatus according to the present embodiment is similar to the dry electrode manufacturing apparatus according to the embodiments described with reference to FIG. 1. Thus, detailed descriptions of the same components are omitted.

As shown in FIG. 3, the dry electrode manufacturing apparatus according to the present embodiment may include a fine powder supply portion PMS that supplies a fine powder PM for an electrode, and a plurality of rollers RL1, RL21, RL31, and RL41 for calendering and stretching the supplied fine powder PM.

The first roller RL1 and the second roller RL21 among the plurality of rollers may calender the supplied fine powder PM. The second roller RL21, the third roller RL31, and the fourth roller RL41 among the plurality of rollers may stretch the calendered electrode film PLT to form a thin and uniform electrode film PLT. The embodiment is not limited and, for example, the number of rollers for stretching among the plurality of rollers RL1, RL21, RL31, and RL41 may be changed.

The first roller RL1 may have a first rotational velocity RD1 and may rotate in a first rotation direction (for example, a clockwise direction). The second roller RL21 may have a second rotational velocity RD21 and may rotate in a second rotation direction (for example, a counterclockwise direction) opposite to the first rotation direction. The third roller RL31 may have a third rotational velocity RD31 and may rotate in a third rotation direction that is opposite to the second rotation direction. The fourth roller RL41 may have a fourth rotational velocity RD41 and may rotate in a fourth rotation direction that is opposite to the third rotation direction.

Unlike the dry electrode manufacturing apparatuses according to the embodiments described above, a diameter of the second roller RL21 of the dry electrode manufacturing apparatus according to the present embodiment may be greater than a diameter of the first roller RL1, a diameter of the third roller RL31 may be greater than the diameter of the second roller RL21, and a diameter of the fourth roller RL41 may be greater than the diameter of the third roller RL31. However, the embodiment is not limited thereto.

The first rotational velocity RD1 of the first roller RL1 may be similar to or the same as the second rotational velocity RD21 of the second roller RL21. The third rotational velocity RD31 of the third roller RL31 may be similar to or the same as the second rotational velocity RD21 of the second roller RL21. The rotational velocity RD41 of the fourth roller RL41 may be similar to or the same as the third rotational velocity RD31 of the third roller RL31. However, the embodiment is not limited thereto.

As the fine powder PM is supplied between the first roller RL1 and the second roller RL21 from the fine powder supply portion PMS, the first roller RL1 and the second roller RL21 may rotate in the first and second rotation directions (which are different) so that the supplied fine powder PM is calendered to form the electrode film (or the film for the electrode) PLT with a film shape. The electrode film PLT that passes between the first roller RL1 and the second roller RL21 may be stretched while sequentially passing through the second roller RL21, the third roller RL31, and the fourth roller RL41.

Because the diameter of the second roller RL21 is greater than the diameter of the first roller RL1, a linear velocity in the second rotation direction of the second roller RL21 may be greater than a linear velocity in the first rotation direction of the first roller RL1. Thus, the electrode film PLT passing between the first roller RL1 and the second roller RL21 may be transferred toward the second roller RL21 having a higher linear velocity than that of the first roller RL1.

Because the diameter of the third roller RL31 is greater than the diameter of the second roller RL21, the electrode film PLT passing between the second roller RL21 and the third roller RL31 may be transferred toward the third roller RL31 having a higher linear velocity than that of the second roller RL21. Similarly, because the diameter of the fourth roller RL41 is greater than the diameter of the third roller RL31, the electrode film PLT passing between the third roller RL31 and the fourth roller RL41 may be transferred toward the fourth roller RL41 having a higher linear velocity than that of the third roller RL31.

The fine powder PM passing between the first roller RL1 and the second roller RL21 may be calendered to form the electrode film PLT with the film shape. The calendered electrode film PLT may be automatically transferred, compressed, and stretched while passing through the second roller RL21, the third roller RL31, and the fourth roller RL41. Because the electrode film PLT is automatically transferred sequentially to the second roller RL21, the third roller RL31, and the fourth roller RL41, compressed, and stretched, the electrode film PLT may not be stretched in a state in which the electrode film PLT is subsequently elongated. Thus, a crack or a defect formed in a freestanding electrode film PLT that might occur during a stretching process performed in a state in which the freestanding electrode film PLT is extended may be prevented or reduced, and rupture of the freestanding electrode film PLT may be prevented during a subsequent laminating process.

According to the present embodiments, like the dry electrode manufacturing apparatus according to the embodiments described with reference to FIG. 1, the second rotational velocity RD21 of the second roller RL21 may be greater than the first rotational velocity RD1 of the first roller RL1, the third rotational velocity RD31 of the third roller RL31 may be greater than the second rotational velocity RD21 of the second roller RL21, and the fourth rotational velocity RD41 of the fourth roller RL41 may be greater than the third rotational velocity RD31 of the third roller RL31.

The linear velocity in the second rotation direction of the second roller RL21 may be greater than the linear velocity in the first rotation direction of the first roller RL1. A linear velocity in the third rotation direction of the third roller RL31 may be greater than the linear velocity in the second rotation direction of the second roller RL21. A linear velocity in the fourth rotation direction of the fourth roller RL41 may be greater than the linear velocity in the third rotation direction of the third roller RL31. Thus, the electrode film PLT passing between the first roller RL1 and the second roller RL21 may be transferred toward the second roller RL21 having a higher linear velocity than that of the first roller RL1, the electrode film PLT passing between the second roller RL21 and the third roller RL31 may be transferred toward the third roller RL31 having a higher linear velocity than that of the second roller RL21, and the electrode film PLT passing between the third roller RL31 and the fourth roller RL41 may be transferred toward the fourth roller RL41 having a higher linear velocity than that of the third roller RL31.

Many features of the dry electrode manufacturing apparatuses according to the embodiments described above with reference to FIG. 1 and FIG. 2 are applicable to the present embodiment.

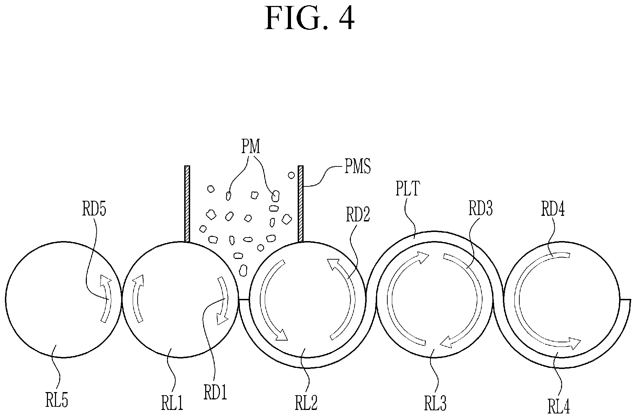

A dry electrode manufacturing apparatus and a manufacturing method of a dry electrode according to other embodiments will be described with reference to FIG. 4. FIG. 4 is a cross-sectional view of the dry electrode manufacturing apparatus, the manufacturing method of the dry electrode, and a manufactured dry electrode according to other embodiments.

Referring to FIG. 4, the dry electrode manufacturing apparatus according to the present embodiment is similar to the dry electrode manufacturing apparatus according to the embodiments described with reference to FIG. 1. Thus, detailed descriptions of the same components are omitted.

As shown in FIG. 4, the dry electrode manufacturing apparatus according to the present embodiment may include a fine powder supply portion PMS that supplies a fine powder PM for an electrode, and a plurality of rollers RL1, RL2, RL3, and RL4 for calendering and stretching the supplied fine powder PM.

The dry electrode manufacturing apparatus according to the present embodiment may further include a fifth roller RL5 in contact with the first roller RL1.

The first roller RL1 and the second roller RL2 among the plurality of rollers may calender the supplied fine powder PM, and the second roller RL2, the third roller RL3, and the fourth roller RL4 among the plurality of rollers may stretch the calendered electrode film PLT to form a thin and uniform electrode film PLT. The embodiment is not limited and, for example, the number of rollers for stretching among the plurality of rollers RL1, RL2, RL3, RL4, and RL5 may be changed.

The first roller RL1 may have a first rotational velocity RD1 and may rotate in a first rotation direction (for example, a clockwise direction). The second roller RL2 may have a second rotational velocity RD2 and may rotate in a second rotation direction (for example, a counterclockwise direction) opposite to the first rotation direction. The third roller RL3 may have a third rotational velocity RD3 and may rotate in a third rotation direction that is opposite to the second rotation direction. The fourth roller RL4 may have a fourth rotational velocity RD4 and may rotate in a fourth rotation direction that is opposite to the third rotation direction.

The second rotational velocity RD2 of the second roller RL2 may be greater than the first rotational velocity RD1 of the first roller RL1. The third rotational velocity RD3 of the third roller RL3 may be greater than the second rotational velocity RD2 of the second roller RL2. The fourth rotational velocity RD4 of the fourth roller RL4 may be greater than the third rotational velocity RD3 of the third roller RL3.

The fifth roller RL5 may have a fifth rotational velocity RD5, and may rotate in a direction opposite to a rotation direction of the first roller RL1.

As the fine powder PM is supplied between the first roller RL1 and the second roller RL2 from the fine powder supply portion PMS, the first roller RL1 and the second roller RL2 may rotate in the first and second rotation directions (which are different) so that the supplied fine powder PM is calendered to form the electrode film (or the film for the electrode) PLT with a film shape. The fifth roller RL5 contacts the first roller RL1 to rotate in a rotation direction opposite to the rotation direction of the first roller RL1 and applies a pressure toward the first roller RL1 and the second roller RL2 while the first roller RL1 and the second roller RL2 are supported together with the third roller RL3 adjacent to the second roller RL2. Thus, a pressure between the first roller RL1 and the second roller RL2 for the calendering may be increased, and even as the fine powder PM is supplied between the first roller RL1 and the second roller RL2, the first roller RL1 and the second roller RL2 may be prevented from being pushed so that active material particles within the electrode film PLT formed through the calendering are uniformly disposed in the electrode film PLT.

The electrode film PLT that passes between the first roller RL1 and the second roller RL2 may be stretched while sequentially passing through the second roller RL2, the third roller RL3, and the fourth roller RL4.

A linear velocity in the second rotation direction of the second roller RL2 may be even greater than a linear velocity in the first rotation direction of the first roller RL1. A linear velocity in the third rotation direction of the third roller RL3 may be even greater than the linear velocity in the second rotation direction of the second roller RL2. A linear velocity in the fourth rotation direction of the fourth roller RL4 may be even greater than the linear velocity in the third rotation direction of the third roller RL3. Thus, the electrode film PLT passing between the first roller RL1 and the second roller RL2 may be transferred toward the second roller RL2 having a higher linear velocity than that of the first roller RL1, the electrode film PLT passing between the second roller RL2 and the third roller RL3 may be transferred toward the third roller RL3 having a higher linear velocity than that of the second roller RL2, and the electrode film PLT passing between the third roller RL3 and the fourth roller RL4 may be transferred toward the fourth roller RL4 having a higher linear velocity than that of the third roller RL3.

The fine powder PM passing between the first roller RL1 and the second roller RL2 may be calendered to form the electrode film PLT with the film shape. The calendered electrode film PLT may be automatically transferred, compressed, and stretched while passing through the second roller RL2, the third roller RL3, and the fourth roller RL4. Thus, the electrode film PLT may not be stretched in a state in which the electrode film PLT is elongated. Thus, a crack or a defect formed in a freestanding electrode film PLT that might occur during a stretching process performed in a state in which the freestanding electrode film PLT is extended may be prevented or reduced, and rupture of the freestanding electrode film PLT may be prevented during a subsequent laminating process.

Many features of the dry electrode manufacturing apparatuses according to the embodiments described above with reference to FIGS. 1 to 3 are applicable to the present embodiment.

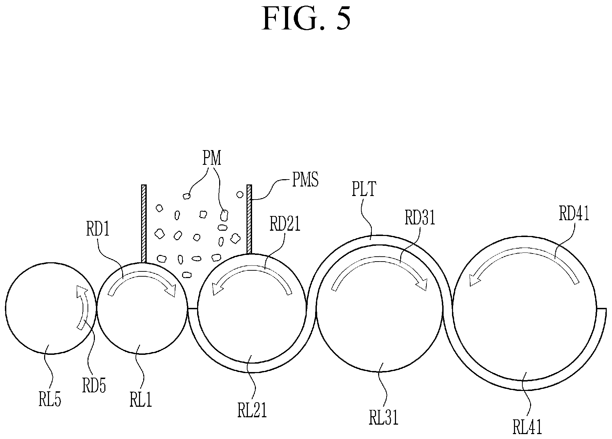

A dry electrode manufacturing apparatus and a manufacturing method of a dry electrode according to other embodiments will be described with reference to FIG. 5. FIG. 5 is a cross-sectional view of the dry electrode manufacturing apparatus, the manufacturing method of the dry electrode, and a manufactured dry electrode according to other embodiments.

Referring to FIG. 5, the dry electrode manufacturing apparatus according to the present embodiment is similar to the dry electrode manufacturing apparatus according to the embodiments described with reference to FIG. 3. Thus, detailed descriptions of the same components are omitted.

As shown in FIG. 5, the dry electrode manufacturing apparatus according to the present embodiment may include a fine powder supply portion PMS that supplies a fine powder PM for an electrode, and a plurality of rollers RL1, RL21, RL31, and RL41 for calendering and stretching the supplied fine powder PM.

The dry electrode manufacturing apparatus according to the present embodiment may further include a fifth roller RL5 in contact with the first roller RL1.

The first roller RL1 and the second roller RL21 among the plurality of rollers may calender the supplied fine powder PM, and the second roller RL21, the third roller RL31, and the fourth roller RL41 among the plurality of rollers may stretch a calendered electrode film PLT to form a thin and uniform electrode film PLT. The embodiment is not limited, for example, the number of rollers for stretching among the plurality of rollers RL1, RL21, RL31, RL41, and RL5 may be changed.

The first roller RL1 may have a first rotational velocity RD1 and may rotate in a first rotation direction (for example, a clockwise direction). The second roller RL21 may have a second rotational velocity RD21 and may rotate in a second rotation direction (for example, a counterclockwise direction) opposite to the first rotation direction. The third roller RL31 may have a third rotational velocity RD31 and may rotate in a third rotation direction that is opposite to the second rotation direction. The fourth roller RL41 may have a fourth rotational velocity RD41 and may rotate in a fourth rotation direction that is opposite to the third rotation direction. The fifth roller RL5 may have a fifth rotational velocity RD5, and may rotate in a direction opposite to a rotation direction of the first roller RL1.

A diameter of the second roller RL21 may be greater than a diameter of the first roller RL1. A diameter of the third roller RL31 may be greater than the diameter of the second roller RL21. A diameter of the fourth roller RL41 may be greater than the diameter of the third roller RL31. However, the embodiment is not limited thereto.

The first rotational velocity RD1 of the first roller RL1 may be similar to or the same as the second rotational velocity RD21 of the second roller RL21. The third rotational velocity RD31 of the third roller RL31 may be similar to or the same as the second rotational velocity RD21 of the second roller RL21. The rotational velocity RD41 of the fourth roller RL41 may be similar to or the same as the third rotational velocity RD31 of the third roller RL31. However, the embodiment is not limited thereto.

As the fine powder PM is supplied between the first roller RL1 and the second roller RL21 from the fine powder supply portion PMS, the first roller RL1 and the second roller RL21 may rotate in the first and second rotation directions that are different directions so that the supplied fine powder PM is calendered to form the electrode film (or the film for the electrode) PLT with a film shape. The fifth roller RL5 contacts the first roller RL1 to rotate in a rotation direction opposite to the rotation direction of the first roller RL1 and applies a pressure toward the first roller RL1 and the second roller RL21 while the first roller RL1 and the second roller RL21 are supported together with the third roller RL31 adjacent to the second roller RL21. Thus, a pressure between the first roller RL1 and the second roller RL21 for the calendering may be increased, and even if the fine powder PM is supplied between the first roller RL1 and the second roller RL21, the first roller RL1 and the second roller RL21 may be prevented from being pushed so that active material particles within the electrode film PLT formed through the calendering are uniformly disposed.

The electrode film PLT that passes between the first roller RL1 and the second roller RL21 may be stretched while sequentially passing through the second roller RL21, the third roller RL31, and the fourth roller RL41.

Because the diameter of the second roller RL21 is greater than the diameter of the first roller RL1, a linear velocity in the second rotation direction of the second roller RL21 may be greater than a linear velocity in the first rotation direction of the first roller RL1. Thus, the electrode film PLT passing between the first roller RL1 and the second roller RL21 may be transferred toward the second roller RL21 having a higher linear velocity than that of the first roller RL1. Because the diameter of the third roller RL31 is greater than the diameter of the second roller RL21, the electrode film PLT passing between the second roller RL21 and the third roller RL31 may be transferred toward the third roller RL31 having a higher linear velocity than that of the second roller RL21. Similarly, because the diameter of the fourth roller RL41 is greater than the diameter of the third roller RL31, the electrode film PLT passing between the third roller RL31 and the fourth roller RL41 may be transferred toward the fourth roller RL41 having a higher linear velocity than that of the third roller RL31.

The fine powder PM passing between the first roller RL1 and the second roller RL21 may be calendered to form the electrode film PLT with the film shape. The calendered electrode film PLT may be automatically transferred, compressed, and stretched while passing through the second roller RL21, the third roller RL31, and the fourth roller RL41. Because the electrode film PLT is automatically transferred sequentially to the second roller RL21, the third roller RL31, and the fourth roller RL41, compressed, and stretched, the electrode film PLT may not be stretched in a state in which the electrode film PLT is subsequently elongated. Thus, a crack or a defect formed in a freestanding electrode film PLT that might occur during a stretching process performed in a state in which the freestanding electrode film PLT is extended may be reduced, and rupture of the freestanding electrode film PLT may be prevented during a subsequent laminating process.

According to the other embodiments, like the dry electrode manufacturing apparatus according to the embodiments described with reference to FIG. 1, the second rotational velocity RD21 of the second roller RL21 may be greater than the first rotational velocity RD1 of the first roller RL1, the third rotational velocity RD31 of the third roller RL31 may be greater than the second rotational velocity RD21 of the second roller RL21, and the fourth rotational velocity RD41 of the fourth roller RL41 may be greater than the third rotational velocity RD31 of the third roller RL31. The linear velocity in the second rotation direction of the second roller RL21 may be even greater than the linear velocity in the first rotation direction of the first roller RL1, the linear velocity in the third rotation direction of the third roller RL31 may be even greater than the linear velocity in the second rotation direction of the second roller RL21, and the linear velocity in the fourth rotation direction of the fourth roller RL41 may be even greater than the linear velocity in the third rotation direction of the third roller RL31. Thus, the electrode film PLT passing between the first roller RL1 and the second roller RL21 may be transferred toward the second roller RL21 having a higher linear velocity than that of the first roller RL1, the electrode film PLT passing between the second roller RL21 and the third roller RL31 may be transferred toward the third roller RL31 having a higher linear velocity than that of the second roller RL21, and the electrode film PLT passing between the third roller RL31 and the fourth roller RL41 may be transferred toward the fourth roller RL41 having a higher linear velocity than that of the third roller RL31.

The fine powder PM passing between the first roller RL1 and the second roller RL21 may be calendered to form the electrode film PLT with the film shape. The calendered electrode film PLT may be automatically transferred, compressed, and stretched while passing through the second roller RL21, the third roller RL31, and the fourth roller RL41. Because the electrode film PLT is automatically transferred sequentially to the second roller RL21, the third roller RL31, and the fourth roller RL41, compressed, and stretched, the electrode film PLT may not be stretched in a state in which the electrode film PLT is subsequently elongated. Thus, a crack or a defect within a freestanding electrode film PLT that may occur during a stretching process performed in a state in which the freestanding electrode film PLT is extended may be reduced, and rupturing of the freestanding electrode film PLT may be prevented during a subsequent laminating process.

Many features of the dry electrode manufacturing apparatuses according to the embodiments described above with reference to FIGS. 1 to 4 are applicable to the present embodiment.

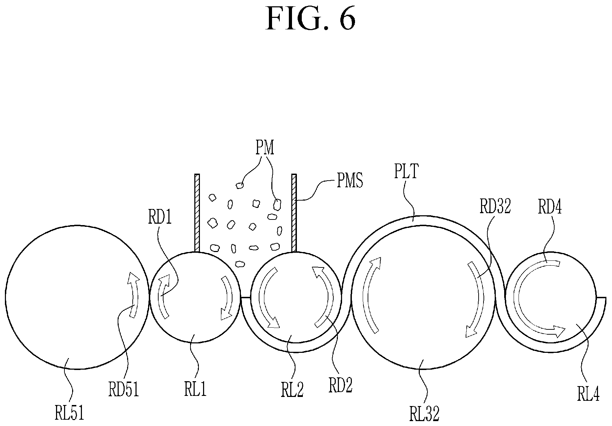

A dry electrode manufacturing apparatus and a manufacturing method of a dry electrode according to other embodiments will be described with reference to FIG. 6. FIG. 6 is a cross-sectional view of the dry electrode manufacturing apparatus, the manufacturing method of the dry electrode, and a manufactured dry electrode according to other embodiments.

Referring to FIG. 6, the dry electrode manufacturing apparatus according to the present embodiment is similar to the dry electrode manufacturing apparatuses according to the embodiments described with reference to FIG. 4 and FIG. 5. Detailed descriptions of the same components are omitted.

As shown in FIG. 6, the dry electrode manufacturing apparatus according to the present embodiment may include a fine powder supply portion PMS that supplies a fine powder PM for an electrode, and a plurality of rollers RL1, RL2, RL32, and RL4 for calendering and stretching the supplied fine powder PM. The dry electrode manufacturing apparatus according to the present embodiment may include a fifth roller RL51 in contact with the first roller RL1.

The first roller RL1 and the second roller RL2 among the plurality of rollers may calender the supplied fine powder PM. The second roller RL2, the third roller RL32, and the fourth roller RL4 among the plurality of rollers may stretch a calendered electrode film PLT to form a thin and uniform electrode film PLT. The embodiment is not limited thereto, and the number of rollers for stretching among the plurality of rollers may be changed.

The first roller RL1 may have a first rotational velocity RD1 and may rotate in a first rotation direction (for example, a clockwise direction), and the second roller RL2 may have a second rotational velocity RD2 and may rotate in a second rotation direction (for example, a counterclockwise direction) opposite to the first rotation direction. The third roller RL32 may have a third rotational velocity RD32 and may rotate in a third rotation direction that is opposite to the second rotation direction, and the fourth roller RL4 may have a fourth rotational velocity RD4 and may rotate in a fourth rotation direction that is opposite to the third rotation direction. The fifth roller RL51 may have a fifth rotational velocity RD51 and may rotate in a direction opposite to a rotation direction of the first roller RL1.

A diameter of the second roller RL2 may be similar to or the same as a diameter of the first roller RL1. A diameter of the third roller RL32 may be greater than the diameter of the second roller RL2, a diameter of the fourth roller RL4 may be almost the same as the diameter of the first roller RL1 and the diameter of the second roller RL2, and a diameter of the fifth roller RL51 may be greater than the diameter of the first roller RL1. However, the embodiment is not limited thereto.

The second rotational velocity RD2 of the second roller RL2 may be greater than the first rotational velocity RD1 of the first roller RL1. The third rotational velocity RD32 of the third roller RL32 may be similar to or the same as the second rotational velocity RD2 of the second roller RL2. The fourth rotational velocity RD4 of the fourth roller RL4 may be greater than the third rotational velocity RD32 of the third roller RL32. However, the embodiment is not limited thereto.

As the fine powder PM is supplied between the first roller RL1 and the second roller RL2 from the fine powder supply portion PMS, the first roller RL1 and the second roller RL2 may rotate in the first and second rotation directions that are different so that the supplied fine powder PM is calendered to form the electrode film (or the film for the electrode) PLT with a film shape. The fifth roller RL51 that contacts the first roller RL1 to rotate in a rotation direction opposite to the rotation direction of the first roller RL1 may apply a pressure toward the first roller RL1 and the second roller RL2 while the first roller RL1 and the second roller RL2 are supported together with the third roller RL32 adjacent to the second roller RL2. Thus, a pressure between the first roller RL1 and the second roller RL2 for the calendering may be increased. And even if the fine powder PM is supplied between the first roller RL1 and the second roller RL2, the first roller RL1 and the second roller RL2 may be prevented from being pushed so that active material particles within the electrode film PLT formed through the calendering are uniformly disposed. Because the diameters of the fifth roller RL51 and the third roller RL32 applying the pressure toward the first roller RL1 and the second roller RL2 while supporting the first roller RL1 and the second roller RL2 are greater than the diameter of the first roller RL1 and the diameter of the second roller RL2, the fifth roller RL51 and the third roller RL32 may support the first roller RL1 and the second roller RL2 and may apply pressure toward the first roller RL1 and the second roller RL2.

The electrode film PLT that passes between the first roller RL1 and the second roller RL21 may be stretched while sequentially passing through the second roller RL2, the third roller RL32, and the fourth roller RL4.

The second rotational velocity RD2 of the second roller RL2 may be greater than the first rotational velocity RD1 of the first roller RL1 such that a linear velocity in the second rotation direction of the second roller RL2 is greater than a linear velocity in the first rotation direction of the first roller RL1. Thus, the electrode film PLT passing between the first roller RL1 and the second roller RL2 may be transferred toward the second roller RL2 having a higher linear velocity than that of the first roller RL1.

The third rotational velocity RD32 of the third roller RL32 may be similar to or the same as the second rotational velocity RD2 of the second roller RL2. But the diameter of the third roller RL32 may be greater than the diameter of the second roller RL2 so that a linear velocity in the third rotation direction of the third roller RL32 is greater than the linear velocity in the second rotation direction of the second roller RL2. Thus, the electrode film PLT passing between the second roller RL2 and the third roller RL32 may be transferred toward the third roller RL32 having a higher linear velocity than that of the second roller RL2.

The fourth rotational velocity RD4 of the fourth roller RL4 may be greater than the third rotational velocity RD32 of the third roller RL32, and a linear velocity in the fourth rotation direction of the fourth roller RL4 may be greater than the linear velocity in the third rotation direction of the third roller RL32. Thus, the electrode film PLT that passes between the third roller RL32 and the fourth roller RL4 may be transferred toward the fourth roller RL4 having a higher linear velocity than that of the third roller RL32.

The fine powder PM passing between the first roller RL1 and the second roller RL2 may be calendered to form the electrode film PLT with the film shape. The calendered electrode film PLT may be automatically transferred, compressed, and stretched while passing through the second roller RL2, the third roller RL32, and the fourth roller RL4. Because the electrode film PLT is automatically transferred sequentially to the second roller RL2, the third roller RL32, and the fourth roller RL4, compressed, and stretched, the electrode film PLT may not be stretched in a state in which the electrode film PLT is subsequently elongated. Thus, a crack or a defect within a freestanding electrode film PLT that may occur during a stretching process performed in a state in which the freestanding electrode film PLT is extended may be reduced, and rupturing of the freestanding electrode film PLT may be prevented during a subsequent laminating process.

Many features of the dry electrode manufacturing apparatuses according to the embodiments described above with reference to FIGS. 1 to 5 are applicable to the present embodiment.

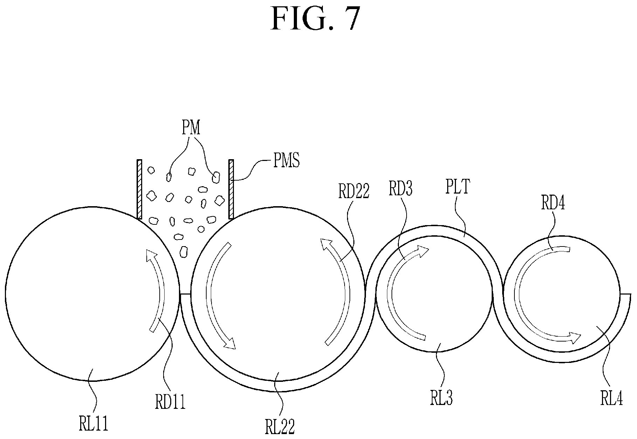

A dry electrode manufacturing apparatus and a manufacturing method of a dry electrode according to other embodiments will be described with reference to FIG. 7. FIG. 7 is a cross-sectional view of the dry electrode manufacturing apparatus, the manufacturing method of the dry electrode, and a manufactured dry electrode according to other embodiments.

Referring to FIG. 7, the dry electrode manufacturing apparatus according to the present embodiment is similar to the dry electrode manufacturing apparatus according to the embodiments described with reference to FIG. 1. Detailed descriptions of the same components are omitted.

As shown in FIG. 7, the dry electrode manufacturing apparatus according to the present embodiment may include a fine powder supply portion PMS that supplies a fine powder PM for an electrode, and a plurality of rollers RL11, RL22, RL3, and RL4 for calendering and stretching the supplied fine powder PM.

The first roller RL11 and the second roller RL22 among the plurality of rollers may calender the supplied fine powder PM. The second roller RL22, the third roller RL3, and the fourth roller RL4 among the plurality of rollers may stretch a calendered electrode film PLT to form a thin and uniform electrode film PLT. The embodiment is not limited thereto, and the number of rollers for stretching among the plurality of rollers may be changed.

The first roller RL11 may have a first rotational velocity RD11 and may rotate in a first rotation direction (for example, a clockwise direction), and the second roller RL22 may have a second rotational velocity RD22 and may rotate in a second rotation direction (for example, a counterclockwise direction) opposite to the first rotation direction. The third roller RL3 may have a third rotational velocity RD3 and may rotate in a third rotation direction that is opposite to the second rotation direction. The fourth roller RL4 may have a fourth rotational velocity RD4 and may rotate in a fourth rotation direction that is opposite to the third rotation direction. A diameter of the first roller RL11 and a diameter of the second roller RL22 may be greater than a diameter of the third roller RL3 and a diameter of the fourth roller RL4. However, the embodiment is not limited thereto.

The second rotational velocity RD22 of the second roller RL22 may be greater than the first rotational velocity RD11 of the first roller RL11. The third rotational velocity RD3 of the third roller RL3 may be greater than the second rotational velocity RD22 of the second roller RL22. The fourth rotational velocity RD4 of the fourth roller RL4 may be greater than the third rotational velocity RD3 of the third roller RL3. However, the embodiment is not limited thereto.

As the fine powder PM is supplied between the first roller RL11 and the second roller RL22 from the fine powder supply portion PMS, the first roller RL11 and the second roller RL22 may rotate in the first and second rotation directions that are different so that the supplied fine powder PM is calendered to form the electrode film (or the film for the electrode) PLT with a film shape. The electrode film PLT that passes between the first roller RL11 and the second roller RL22 may be stretched while sequentially passing through the second roller RL22, the third roller RL3, and the fourth roller RL4.

Because the diameter of the first roller RL11 and the diameter of the second roller RL22 are large, a pressure applied to the fine powder PM during the calendering may increase. Thus, when the fine powder PM is changed into a film shape, a physical property of the fine powder PM may be reduced so that the calendering is well performed.

The second rotational velocity RD22 of the second roller RL22 may be greater than the first rotational velocity RD11 of the first roller RL11. Thus, even if the diameter of the first roller RL11 and the diameter of the second roller RL22 are almost the same, a linear velocity in the second rotation direction of the second roller RL22 may become even greater than a linear velocity in the first rotation direction of the first roller RL11. Thus, the electrode film PLT that passes between the first roller RL11 and the second roller RL22 may be transferred toward the second roller RL22 having a higher linear velocity than that of the first roller RL11.

The third rotational velocity RD3 of the third roller RL3 may be greater than the second rotational velocity RD22 of the second roller RL22. Thus, even if the diameter of the third roller RL3 is smaller than the diameter of the second roller RL22, a linear velocity in the third rotation direction of the third roller RL3 may become even greater than the linear velocity in the second rotation direction of the second roller RL22. Thus, the electrode film PLT that passes between the second roller RL22 and the third roller RL3 may be transferred toward the third roller RL3 having a higher linear velocity than that of the second roller RL22.

The fourth rotational velocity RD4 of the fourth roller RL4 may be greater than the third rotational velocity RD3 of the third roller RL3, and a linear velocity in the fourth rotation direction of the fourth roller RL4 may become even greater than the linear velocity in the third rotation direction of the third roller RL3. Thus, the electrode film PLT that passes between the third roller RL3 and the fourth roller RL4 may be transferred toward the fourth roller RL4 having a higher linear velocity than that of the third roller RL3.

The fine powder PM passing between the first roller RL11 and the second roller RL22 may be calendered to form the electrode film PLT with the film shape. The calendered electrode film PLT may be automatically transferred, compressed, and stretched while passing through the second roller RL22, the third roller RL3, and the fourth roller RL4. Because the electrode film PLT is automatically transferred sequentially to the second roller RL22, the third roller RL3, and the fourth roller RL4, compressed, and stretched, the electrode film PLT may not be stretched in a state in which the electrode film PLT is subsequently elongated. Thus, a crack or a defect within a freestanding electrode film PLT that may occur during a stretching process performed in a state in which the freestanding electrode film PLT is extended may be reduced, and rupturing of the freestanding electrode film PLT may be prevented during a subsequent laminating process.

Many features of the dry electrode manufacturing apparatuses according to the embodiments described above with reference to FIGS. 1 to 6 are applicable to the present embodiment.

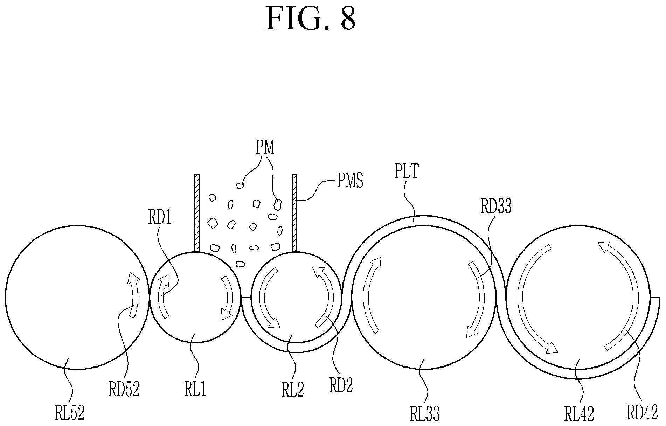

A dry electrode manufacturing apparatus and a manufacturing method of a dry electrode according to other embodiments will be described with reference to FIG. 8. FIG. 8 is a cross-sectional view of the dry electrode manufacturing apparatus, the manufacturing method of the dry electrode, and a manufactured dry electrode according to other embodiments.

Referring to FIG. 8, the dry electrode manufacturing apparatus according to the present embodiment is similar to the dry electrode manufacturing apparatuses according to the embodiments described with reference to FIGS. 4 to 6. Detailed descriptions of the same components are omitted.

As shown in FIG. 8, the dry electrode manufacturing apparatus according to the present embodiment may include a fine powder supply portion PMS that supplies a fine powder PM for an electrode, and a plurality of rollers RL1, RL2, RL33, and RL42 for calendering and stretching the supplied fine powder PM. The dry electrode manufacturing apparatus according to the present embodiment may include a fifth roller RL52 in contact with the first roller RL1.

The first roller RL1 and the second roller RL2 among the plurality of rollers may calender the supplied fine powder PM, and the second roller RL2, the third roller RL33, and the fourth roller RL42 among the plurality of rollers RL1, RL2, RL33, RL42, and RL52 may stretch a calendered electrode film PLT to form a thin and uniform electrode film PLT. The embodiment is not limited thereto, and the number of rollers for stretching among the plurality of rollers may be changed.

The first roller RL1 may have a first rotational velocity RD1 and may rotate in a first rotation direction (for example, a clockwise direction), and the second roller RL2 may have a second rotational velocity RD2 and may rotate in a second rotation direction (for example, a counterclockwise direction) opposite to the first rotation direction. The third roller RL33 may have a third rotational velocity RD33 and may rotate in a third rotation direction that is opposite to the second rotation direction, and the fourth roller RL42 may have a fourth rotational velocity RD42 and may rotate in a fourth rotation direction that is opposite to the third rotation direction. The fifth roller RL52 may have a fifth rotational velocity RD52 and may rotate in a direction opposite to a rotation direction of the first roller RL1.

A diameter of the second roller RL2 may be similar to or the same as a diameter of the first roller RL1, a diameter of the third roller RL33 may be greater than the diameter of the second roller RL2, a diameter of the fourth roller RL42 may be similar to or the same as the diameter of the third roller RL33, and a diameter of the fifth roller RL52 may be greater than the diameter of the first roller RL1. However, the embodiment is not limited thereto.

The second rotational velocity RD2 of the second roller RL2 may be greater than the first rotational velocity RD1 of the first roller RL1. The third rotational velocity RD33 of the third roller RL33 may be similar to or the same as the second rotation velocity RD2 of the second roller RL2, and the fourth rotation velocity RD42 of the fourth roller RL42 may be greater than the third rotation velocity RD33 of the third roller RL33. However, the embodiment is not limited thereto.

As the fine powder PM is supplied between the first roller RL1 and the second roller RL2 from the fine powder supply portion PMS, the first roller RL1 and the second roller RL2 may rotate in the first and second rotation directions that are different so that the supplied fine powder PM is calendered to form the electrode film (or the film for the electrode) PLT with a film shape. The fifth roller RL52 that contacts the first roller RL1 to rotate in a rotation direction opposite to the rotation direction of the first roller RL1 may apply a pressure toward the first roller RL1 and the second roller RL2 while the first roller RL1 and the second roller RL2 are supported together with the third roller RL33 adjacent to the second roller RL2. Thus, a pressure between the first roller RL1 and the second roller RL2 for the calendering may be increased, and even if the fine powder PM is supplied between the first roller RL1 and the second roller RL2, the first roller RL1 and the second roller RL2 may be prevented from being pushed so that active material particles within the electrode film PLT formed through the calendering are uniformly disposed. Because the diameters of the fifth roller RL52 and the third roller RL33 applying the pressure toward the first roller RL1 and the second roller RL2 while the first roller RL1 and the second roller RL2 are supported are greater than the diameter of the first roller RL1 and the diameter of the second roller RL2, the fifth roller RL52 and the third roller RL33 may well support the first roller RL1 and the second roller RL2 and may apply a great pressure toward the first roller RL1 and the second roller RL2.

The electrode film PLT that passes between the first roller RL1 and the second roller RL2 may be stretched while sequentially passing through the second roller RL2, the third roller RL33, and the fourth roller RL42.

The second rotational velocity RD2 of the second roller RL2 may be greater than the first rotational velocity RD1 of the first roller RL1 such that a linear velocity in the second rotation direction of the second roller RL2 is greater than a linear velocity in the first rotation direction of the first roller RL1. Thus, the electrode film PLT passing between the first roller RL1 and the second roller RL2 may be transferred toward the second roller RL2 having a higher linear velocity than that of the first roller RL1. The third rotational velocity RD33 of the third roller RL33 may be almost the same as the second rotational velocity RD2 of the second roller RL2, but the diameter of the third roller RL33 may be greater than the diameter of the second roller RL2 such that a linear velocity in the third rotation direction of the third roller RL33 is greater than the linear velocity in the second rotation direction of the second roller RL2. Thus, the electrode film PLT passing between the second roller RL2 and the third roller RL33 may be transferred toward the third roller RL33 having a higher linear velocity than that of the second roller RL2.

The fourth rotational velocity RD42 of the fourth roller RL42 may be greater than the third rotational velocity RD33 of the third roller RL33. Thus, even if the diameter of the fourth roller RL42 and the diameter of the third roller RL33 are almost the same, the linear velocity in the third rotation direction of the third roller RL33 may be greater than a linear velocity in the fourth rotation direction of the fourth roller RL42. Thus, the electrode film PLT that passes between the third roller RL33 and the fourth roller RL42 may be transferred toward the fourth roller RL42 having a higher linear velocity than that of the third roller RL33.

The fine powder PM passing between the first roller RL1 and the second roller RL2 may be calendered to form the electrode film PLT with the film shape. The calendered electrode film PLT may be automatically transferred, compressed, and stretched while passing through the second roller RL2, the third roller RL33, and the fourth roller RL42. Because the electrode film PLT is automatically transferred sequentially to the second roller RL2, the third roller RL33, and the fourth roller RL42, compressed, and stretched, the electrode film PLT may not be stretched in a state in which the electrode film PLT is subsequently elongated. Thus, a crack or a defect within a freestanding electrode film PLT that may occur during a stretching process performed in a state in which the freestanding electrode film PLT is extended may be reduced, and rupturing of the freestanding electrode film PLT may be prevented during a subsequent laminating process.

Many features of the dry electrode manufacturing apparatuses according to the embodiments described above with reference to FIGS. 1 to 7 are applicable to the present embodiment.

While this disclosure has been described in connection with what is presently considered to be practical embodiments, it is to be understood that the disclosure is not limited to the disclosed embodiments. On the contrary, this disclosure covers various modifications and equivalent arrangements.

### <Description of symbols>

PMS: fine powder supply portion
PM: fine powder
RL1, RL11, RL2, RL21, RL22, RL3, RL31, RL32, RL33, RL4, RL41, RL42, RL5, RL51, RL52: roller
ST1, ST2, ST3: protrusion

## Claims

1. A dry electrode manufacturing apparatus comprising:
a fine powder supply portion configured to supply a fine powder;
a first roller and a second roller configured to calender the fine powder supplied from the fine powder supply portion to form an electrode film; and
a third roller and a fourth roller configured to stretch the calendared electrode film formed by the first roller and the second roller,
wherein the first roller is configured to rotate in a first direction at a first rotational velocity, the second roller is configured to rotate in a second direction different from the first direction at a second rotational velocity, the third roller is configured to rotate in a third direction different from the second direction at a third rotational velocity, the fourth roller is configured to rotate in a fourth direction different from the third direction at a fourth rotational velocity, and
wherein the dry electrode manufacturing apparatus is configured such that a linear velocity in the second direction of the second roller is greater than a linear velocity in the first direction of the first roller, a linear velocity in the third direction of the third roller is greater than the linear velocity in the second direction of the second roller, and a linear velocity in the fourth direction of the fourth roller is greater than the linear velocity in the third direction of the third roller.

2. The dry electrode manufacturing apparatus as claimed in claim 1, wherein the second rotational velocity of the second roller is greater than the first rotational velocity of the first roller, the third rotational velocity of the third roller is greater than the second rotational velocity of the second roller, and the fourth rotational velocity of the fourth roller is greater than the third rotational velocity of the third roller.

3. The dry electrode manufacturing apparatus as claimed in claim 1 or 2, further comprising a fifth roller that is in contact with the first roller and is configured to rotate in a direction different from the first direction.

4. The dry electrode manufacturing apparatus as claimed in claim 1, 2 or 3, wherein a diameter of the second roller is greater than a diameter of the first roller, a diameter of the third roller is greater than the diameter of the second roller, and a diameter of the fourth roller is greater than the diameter of the third roller.

5. The dry electrode manufacturing apparatus as claimed in claim 1 or 2, further comprising a fifth roller that is in contact with the first roller and configured to rotate in a direction different from the first direction.

6. The dry electrode manufacturing apparatus as claimed in claim 5, wherein a diameter of the fifth roller is substantially the same as a diameter of the first roller, a diameter of the second roller, a diameter of the third roller, and a diameter of the fourth roller.

7. The dry electrode manufacturing apparatus as claimed in claim 5, wherein a diameter of the fifth roller is substantially the same as a diameter of the first roller, a diameter of the second roller is greater than the diameter of the first roller, a diameter of the third roller is greater than the diameter of the second roller, and a diameter of the fourth roller is greater than the diameter of the third roller.

8. The dry electrode manufacturing apparatus as claimed in claim 5, wherein a diameter of the fifth roller is greater than a diameter of the first roller, and a diameter of the fourth roller is substantially the same as the diameter of the first roller.

9. The dry electrode manufacturing apparatus as claimed in claim 5, wherein a diameter of the fifth roller is greater than a diameter of the first roller, and a diameter of the fourth roller is substantially the same as the diameter of the fifth roller.

10. A dry electrode manufacturing apparatus, comprising:
a fine powder supply portion configured to supply a fine powder;
a first roller and a second roller configured to calender the fine powder supplied from the fine powder supply portion to form an electrode film; and
a third roller and a fourth roller configured to stretch the calendared electrode film formed by the first roller and the second roller,
wherein a surface adhesive force of the second roller is greater than a surface adhesive force of the first roller, a surface adhesive force of the third roller is greater than the surface adhesive force of the second roller, and a surface adhesive force of the fourth roller is greater than the surface adhesive force of the third roller.

11. The dry electrode manufacturing apparatus as claimed in claim 10, wherein a surface roughness of the second roller is greater than a surface roughness of the first roller, a surface roughness of the third roller is greater than the surface roughness of the second roller, and a surface roughness of the fourth roller is greater than the surface roughness of the third roller, and optionally
wherein first protrusions are disposed on a surface of the second roller, second protrusions are disposed on a surface of the third roller, third protrusions are disposed on a surface of the fourth roller, widths and heights of the second protrusions are greater than widths and heights of the first protrusions, and widths and heights of the third protrusions are greater than the widths and the heights of the second protrusions.

12. A manufacturing method of a dry electrode, the method comprising:
supplying a fine powder between a first roller and a second roller;
calendering the fine powder to form an electrode film by rotating the first roller at a first velocity in a first direction and rotating the second roller at a second velocity in a second direction different from the first direction; and
stretching the calendared electrode film through a third roller and a fourth roller,
wherein the electrode film is sequentially transferred to the second roller, the third roller, and the fourth roller.

13. The manufacturing method as claimed in claim 12, wherein the first roller rotates in the first direction at the first velocity, the second roller rotates in the second direction different from the first direction at the second velocity, the third roller rotates in a third direction different from the second direction at a third velocity, the fourth roller rotates in a fourth direction different from the third direction at a fourth velocity, the second velocity of the second roller is greater than the first velocity of the first roller, the third velocity of the third roller is greater than the second velocity of the second roller, and the fourth velocity of the fourth roller is greater than the third velocity of the third roller.

14. The manufacturing method as claimed in claim 12, wherein the first roller rotates in the first direction at the first velocity, the second roller rotates in the second direction different from the first direction at the second velocity, the third roller rotates in a third direction different from the second direction at a third velocity, the fourth roller rotates in a fourth direction different from the third direction at a fourth velocity, and
wherein the first velocity of the first roller, the second velocity of the second roller, the third velocity of the third roller, and the fourth velocity of the fourth roller are substantially the same, and optionally
wherein a diameter of the second roller is greater than a diameter of the first roller, a diameter of the third roller is greater than the diameter of the second roller, and a diameter of the fourth roller is greater than the diameter of the third roller.

15. A dry electrode film manufactured by the method according to claim 12, 13 or 14.
